# EUROPÄISCHE PATENTSCHRIFT

(11) **EP 2 698 794 B1**
(45) Veröffentlichungstag und Bekanntmachung des Hinweises auf die Patenterteilung: **19.07.2017**
(21) Anmeldenummer: 12306001.4
(22) Anmeldetag: 14.08.2012
(51) Int. Cl.: H01B 12/16, H01B 12/14

(54) **Anordnung mit mindestens einem supraleitfähigen Kabel**
Assembly with at least one superconducting cable
Agencement doté d'au moins un câble supraconducteur

(43) Veröffentlichungstag der Anmeldung: 19.02.2014
(73) Patentinhaber: Nexans, 75008 Paris (FR)
(72) Erfinder: Schmidt, Frank, 30855 Langenhagen (DE); Dr. Stemmle, Mark, 30625 Hannover (DE)
(74) Vertreter: Döring, Roger

(56) Entgegenhaltungen:
- DE-A1- 1 948 520
- DE-A1- 2 116 651
- GB-A- 1 211 183
- JP-A- 2002 352 645

## Beschreibung

Die Erfindung bezieht sich auf eine Anordnung gemäß dem Oberbegriff des Patentanspruchs 1.
Eine solche Anordnung geht aus der DE 19 48 520 A1 hervor.
Ein supraleitfähiges Kabel hat elektrische Leiter aus einem Material, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke, die kritische Stromstärke, nicht überschritten wird. Geeignete Materialien sind beispielsweise oxidische Materialien auf Basis seltener Erden (ReBCO), insbesondere YBCO (Yttrium-Barium-Kupfer-Oxid), oder BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Geeignete Kühlmittel sind beispielsweise Stickstoff, Helium, Neon und Wasserstoff oder Gemische dieser Stoffe. Da die angegebenen Temperaturen deutlich oberhalb des absoluten Nullpunkts von - 273,16°C = 0 K liegen, werden Leiter aus entsprechenden Materialien als HochTemperatur-Supraleiter (HTS-Leiter) bezeichnet. Das gilt auch für andere supraleitfähige Materialien, wie beispielsweise Magnesiumdiborid, die bei Temperaturen von etwa 39 K oder niedriger, die ebenfalls deutlich über 0 K liegen, in den supraleitfähigen Zustand übergehen.
Aus der EP 2 234 122 B1 geht eine Anordnung hervor, bei welcher ein supraleitfähiges Kabel in einem Kryostat angeordnet ist. Der Kryostat besteht aus zwei konzentrisch und mit Abstand zueinander angeordneten Rohren aus Metall, die eine als Vakuumisolierung ausgeführte thermische Isolierung zwischen sich einschließen. Als supraleitfähige Materialien sind die bereits erwähnten oxidischen Materialien auf Basis seltener Erden eingesetzt. Für die Kühlung des Kabels wird beispielsweise flüssiger Stickstoff verwendet, der mit einem üblichen, vakuumisolierten Kryostat über einen größeren Zeitraum bei einer ausreichend niedrigen Kühltemperatur gehalten werden kann. Für niedrigere Temperaturen, die unterhalb von 63 K liegen, kann flüssiger Stickstoff nicht eingesetzt werden, weil er bei diesen Temperaturen in einen festen Zustand übergeht. Außerdem muß für ein auf entsprechend niedriger Temperatur befindliches Kühlmittel ein erhöhter Aufwand getrieben werden, um dasselbe auch über einen größeren Zeitraum ausreichend kühl zu halten.

In der JP 2002352645 A ist ein System mit einem supraleitfähigen Kabel beschrieben, bei dem als supraleitfähiges Material Magnesiumdiborid eingesetzt ist. Das Kabel ist von einem aus zwei konzentrisch zueinander angeordneten Rohren bestehenden Kryostat umgeben, zwischen denen eine Isolierung angebracht ist. Der Raum zwischen den beiden Rohren ist außerdem evakuiert. Das äußere Rohr ist von einer elektrischen Isolierung umgeben, über welcher als mechanischer Schutz zwei Lagen von Stahlbändern aufgewickelt sind.

Die eingangs erwähnte DE 19 48 520 A1 beschreibt eine Anordnung mit einer Rohrleitung für tiefgekühlte Kabel mit zwei konzentrisch zueinander angeordneten Kryostaten, die beide aus zwei konzentrischen, ein Vakuum zwischen sich einschließenden Rohren bestehen. Durch die beiden Kryostate werden Kühlmittel mit unterschiedlichen Temperaturen geleitet, und zwar beispielsweise flüssiges Helium durch den inneren Kryostat und beispielsweise flüssiger Stickstoff durch den äußeren Kryostat. Für das beispielsweise als supraleitfähiges Kabel ausgeführte Kabel geeignete Materialien sind beispielsweise Legierungen aus Niob und Titan bzw. Niob und Zirkon sowie eine Niob-Zinn-Verbindung erwähnt.

Der Erfindung liegt die Aufgabe zugrunde, die eingangs geschilderte Anordnung so zu gestalten, daß sie auf einfache Art und Weise auch für supraleitfähige Materialien einsetzbar ist, die zur Erreichung des supraleitfähigen Zustands auf eine Temperatur von 39 K oder weniger abgekühlt werden müssen.

Diese Aufgabe wird entsprechend den kennzeichnenden Merkmalen des Patentanspruchs 1 gelöst.

Bei dieser Anordnung kann das gegenüber den oxidischen supraleitfähigen Materialien preiswertere Magnesiumdiborid als supraleitfähiges Material eingesetzt werden. Dieses Material hat außerdem eine gegenüber den oxidischen Materialien erhöhte Stromtragfähigkeit. Die Anordnung ist insgesamt relativ einfach aufgebaut. Der erste Kryostat besteht nur aus einem thermisch isolierten Rohr und der zweite Kryostat kann in üblicher Technik um den ersten Kryostat herumgeformt werden. Der zweite Kryostat bedeutet bereits selbst für das im ersten Kryostat geführte Kühlmittel einen erhöhten Schutz gegen Wärmeeinfall von außen. Diese Schirmwirkung des zweiten Kryostats wird durch das verflüssigte Gas wesentlich erhöht, das während des Betriebs der Anordnung durch denselben geleitet wird. Als verflüssigtes Gas wird mit Vorteil flüssiger Stickstoff eingesetzt. Der zweite Kryostat hat dadurch insgesamt die Wirkung eines Hitzeschildes für den ersten Kryostat, so daß das darin geführte Kühlmittel auf einer relativ langen Strecke, entlang der die Anordnung verlegt ist, bei einer ausreichend niedrigen Kühltemperatur gehalten werden kann. Die in dem zweiten Kryostat angebrachte hochspannungsfeste Isolierung, welche den ersten Kryostat rundum umschließt und auf dessen thermischer Isolierung aufliegt, erhält durch das verflüssigte Gas, welches die Isolierung umspült und durch welches dieselbe durchtränkt wird, wesentlich verbesserte dielektrische Werte.

Ein Ausführungsbeispiel des Erfindungsgegenstandes ist in den Zeichnungen dargestellt. Es zeigen:
Fig. 1 schematisch eine Übertragungsstrecke für elektrische Energie mit einer Anordnung nach der Erfindung.
Fig. 2 einen Querschnitt der Anordnung nach einem Aspekt der Erfindung in vergrößerter Darstellung.
Fig. 3 eine gegenüber Fig. 2 ergänzte Ausführungsform der Anordnung ebenfalls im Schnitt.

Als erstes Kühlmittel sind beispielsweise flüssiger Wasserstoff mit einer Kühltemperatur von etwa 20,28 K, flüssiges Neon mit einer Kühltemperatur von etwa 27,07 K und Heliumgas mit einer Kühltemperatur von 39 K oder tiefer geeignet. Im folgenden wird stellvertretend für alle geeigneten Kühlmittel Heliumgas als erstes Kühlmittel berücksichtigt.

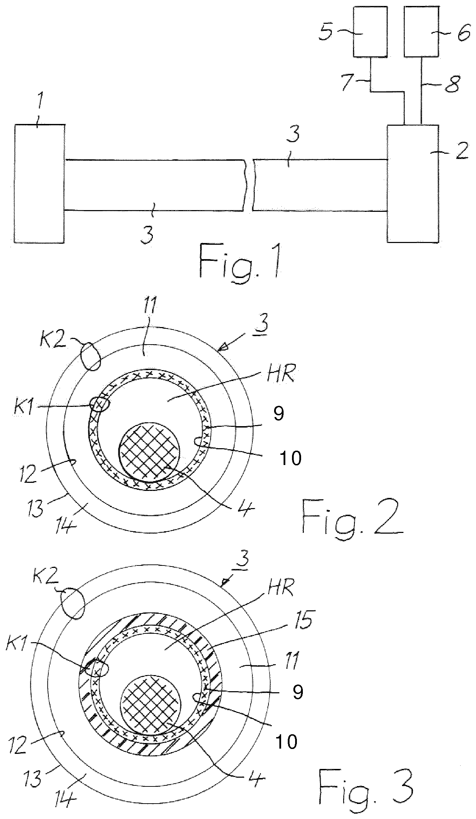

Die Übertragungsstrecke nach Fig. 1 weist zwei Endenabschlüsse 1 und 2 auf, zwischen denen eine Anordnung 3 mit mindestens einem supraleitfähigen Kabel 4 (Fig. 2 und 3) angebracht ist. Die Übertragungsstrecke kann eine Länge von beispielsweise 600 m haben. In ihrem Verlauf kann auch mindestens eine Verbindungsstelle zum Verbinden von jeweils zwei Anordnungen 3 angebracht sein. In den Endenabschlüssen 1 und 2 ist das supraleitfähige Kabel 4 in bekannter Technik an elektrische Elemente angeschlossen. Der Endenabschluß 2 ist im dargestellten Ausführungsbeispiel mit zwei Vorratsbehältern 5 und 6 verbunden, welche jeweils ein Kühlmittel enthalten. Im Vorratsbehälter 5 befindet sich mit Vorteil Heliumgas, während der Vorratsbehälter 6 mit Vorteil flüssigen Stickstoff enthält. Die Kühlmittel werden über Rohrleitungen 7 und 8 in den Endenabschluß 2 geleitet und in bekannter Technik mittels Pumpen unter Druck in zwei Kryostate K1 und K2 (Fig. 2 und 3) geleitet, welche das Kabel 4 umgeben.

Vorratsbehälter für Kühlmittel können auch am Endenabschluß 1 und gegebenenfalls an einer Verbindungsstelle vorhanden sein. Zur Einhaltung bzw. Aufrechterhaltung der niedrigen Temperatur für das Heliumgas wird zweckmäßig eine geeignete Kühlanlage verwendet und das Heliumgas wird mit Vorteil in einem Kreislauf durch die Anordnung bewegt.

In der Anordnung nach Fig. 2 ist schematisch ein supraleitfähiges Kabel 4 eingezeichnet, dessen Aufbau grundsätzlich beliebig und in vielfältiger Ausführung bekannt ist. Als supraleitfähiges Material ist im Kabel 4 für dessen Leiter und gegebenenfalls auch für einen Schirm Magnesiumdiborid eingesetzt. Das Kabel 4 kann zur Übertragung von elektrischer Energie im Mittelspannungsbereich (etwa ab 1 kV) und im Hochspannungsbereich (etwa ab 80 kV) dienen.

Das Kabel 4 ist von einem ersten Kryostat K1 umgeben, der aus einem von einer thermischen Isolierung 9 umgebenen Rohr 10 besteht. Die thermische Isolierung 9 soll den Innenraum des ersten Kryostats K1 vor einem Wärmeeinfall von außen schützen. Sie kann aus üblichen, der thermischen Isolierung dienenden Materialien bestehen, mit einer möglichst glatten und geschlossenen äußeren Oberfläche, damit gegebenenfalls keine Feuchtigkeit eindringen kann. Das gilt beispielsweise auch für geschäumtes Material, das dann mit einer geschlossenen Außenfläche ausgeführt sein sollte, einem sogenannten "Skin". Das Rohr 10 kann aus Metall bestehen, aber auch aus einem stabilen Kunststoff. In dem ersten Kryostat K1 können auch zwei oder mehr supraleitfähige Kabel angeordnet sein.

Der erste Kryostat K1 umschließt einen Hohlraum HR, in welchem das Kabel 4 angeordnet ist und durch welchen während des Betriebes der Anordnung aus dem Vorratsbehälter 5 heraus Heliumgas gepumpt wird. Beim Betrieb der Anordnung wird das supraleitfähige Material, das Magnesiumdiborid, auf eine Temperatur von 39 K oder weniger abgekühlt.

Unter Einhaltung eines konzentrischen Zwischenraums 11 ist um den ersten Kryostat K1 ein zweiter Kryostat K2 herum angebracht, der aus zwei konzentrisch und mit Abstand zueinander angeordneten Rohren 12 und 13 aus Metall besteht, die eine Vakuumisolierung 14 zwischen sich einschließen. Zwischen den Rohren 12 und 13 befindet sich auch eine Abstandshalterung.

Durch den zweiten Kryostat K2, also durch den Zwischenraum 11, wird während des Betriebes der Anordnung aus dem Vorratsbehälter 6 beispielsweise flüssiger Stickstoff als zweites Kühlmittel gepumpt. Der Zwischenraum 11 wird dadurch beispielsweise auf etwa 67 K bis 77 K abgekühlt. Als zweites Kühlmittel könnten auch LNG, das auf mindestens 112 K abgekühlt ist oder flüssiger Sauerstoff verwendet werden, der auf eine Temperatur von mindestens 90 K abgekühlt ist. Das zweite Kühlmittel, vorzugsweise der flüssige Stickstoff, der im folgenden berücksichtigt wird, stellt zusammen mit dem zweiten Kryostat K2 einen wirksamen Hitzeschild für den ersten Kryostat K1 dar, so daß das durch denselben geleitete Heliumgas vor einer zu schnellen Erwärmung durch von außen einfallende Wärme geschützt ist.

Die hochspannungsfeste Isolierung 15 bzw. das Dielektrikum des Kabels 4 ist im Zwischenraum 11 angeordnet, und zwar als eine das Rohr 10 des ersten Kryostats K1 vollständig umschließende Lage aus einem hochspannungsfesten Isoliermaterial, die auf der thermischen Isolierung 9 des ersten Kryostats K1 aufliegt. Als Isoliermaterial für die hochspannungsfeste Isolierung 15 können beispielsweise Papier oder mit Papier beschichteter Kunststoff eingesetzt werden.

Die hochspannungsfeste Isolierung 15 wird im Zwischenraum 11 vom flüssigen Stickstoff umspült und auch von demselben durchtränkt, wodurch sich eine erhöhte dielektrische Festigkeit derselben ergibt. Alle von der hochspannungsfesten Isolierung 15 umgebenen Elemente aus Metall befinden sich auf einem Potential mit erhöhter Spannung, mit Vorteil auf Hochspannungspotential. Falls ein supraleitfähiges Kabel 4 mit einem supraleitfähigen Schirm eingesetzt wird, dann wird der Schirm über der hochspannungsfesten Isolierung 15 im Zwischenraum 11 angeordnet. Für den Schirm werden mit Vorteil oxidische supraleitfähige Materialien verwendet.

## Patentansprüche

1. Anordnung (3) mit mindestens einem supraleitfähigen Kabel (4) und einem dasselbe umgebenden ersten, rohrförmigen Kryostat (K1) zur Durchleitung eines ersten Kühlmittels, welcher auf seiner ganzen Länge einen Hohlraum (HR) umschließt, in dem das Kabel (4) angeordnet ist und durch welchen beim Betrieb der Anordnung (3) das erste Kühlmittel geleitet wird, wobei als erstes Kühlmittel ein auf eine Temperatur von 39 K oder weniger abgekühltes, flüssiges oder gasförmiges Kühlmittel verwendet ist, bei welcher um den ersten Kryostat (K1) koaxial und mit Abstand zu demselben ein zweiter Kryostat (K2) zum Durchleiten eines zweiten Kühlmittels herumgeformt ist, der aus zwei koaxial und mit Abstand zueinander angeordneten, eine thermische Isolierung zwischen sich einschließenden Rohren (12, 13) fahren aus Metall besteht und durch welchen während des Betriebes der Anordnung (3) ein verflüssigtes Gas mit einer Temperatur von 112 K oder weniger geleitet wird,
**dadurch gekennzeichnet,**
- **daß** als supraleitfähiges Material Magnesiumdiborid eingesetzt ist,
- **daß** der erste Kryostat (K1) nur aus einem thermisch isolierten Rohr (10) besteht und
- **daß** in dem Zwischenraum (11) zwischen dem ersten Kryostat (K1) und dem zweiten Kryostat (K2) eine hochspannungsfeste Isolierung (15) angeordnet ist, die das Rohr (10) des ersten Kryostats (K1) rundum umschließt und auf dessen thermischer Isolierung (9) aufliegt und die während des Betriebes der Anordnung von dem durch den Zwischenraum (11) geleiteten verflüssigten Gas umspült und von demselben durchtränkt ist.

2. Anordnung nach Anspruch 1, **dadurch gekennzeichnet, daß** als erstes Kühlmittel Heliumgas verwendet ist.

## Claims

1. Arrangement (3) with at least one superconductive cable (4) and a first cryostat (K1) surrounding the same for conducting a first cooling agent therethrough, which encloses a hollow space (HR) over its entire length in which the cable (4) is placed and through which during operation of the arrangement (3) the first cooling agent is conducted, wherein as the first cooling agent a fluid or gaseous coolant is used which is cooled to a temperature of 39 K or lower, and wherein a second cryostat (K2) is mounted around the first cryostat (K1) coaxially and at a distance to the same for conducting a second cooling agent, which consists of two tubes (12,13) of metal with a thermal insulation therebetween and through which a liquefied gas having a temperature of 112 K or lower is conducted during operation of the arrangement (3), **characterized in**
- **that** magnesium diboride is used as superconductive material,
- **that** the first cryostat (K1) consists of a tube (10) having a thermal insulation only and
- **that** a high voltage insulation (15) is arranged in the intermediate space (11) between the first cryostat (K1) and the second cryostat (K2) which completely surrounds the tube (10) of the first cryostat (K1) and abuts to the thermal insulation of the same, and around which during operation of the arrangement the liquefied gas which flows through the intermediate space (11) is flowing and impregnating the insulation (15).

2. Arrangement according to claim 1, **characterized in that** the first cooling agent is helium gas.

## Revendications

1. Arrangement (3) comprenant au moins un câble supraconducteur (4) et un premier cryostat (K1) de forme tubulaire qui entoure celui-ci et qui est destiné à l'acheminement d'un premier réfrigérant, lequel entoure sur toute sa longueur un espace vide dans lequel est disposé le câble (4) et à travers lequel le premier réfrigérant est acheminé lors du fonctionnement de l'arrangement (3), le premier réfrigérant utilisé étant un réfrigérant liquide ou gazeux refroidi à une température inférieure ou égale à 39 K, avec lequel un deuxième cryostat (K2) destiné à acheminer un deuxième réfrigérant est façonné autour du premier cryostat (K1) de manière coaxiale et à un écart donné de celui-ci, lequel se compose de deux tubes métalliques (12, 13) disposés de manière coaxiale et à distance l'un par rapport à l'autre et incluant une isolation thermique entre eux, et à travers lesquels est acheminé un gaz liquéfié à une température inférieure ou égale à 112 K pendant le fonctionnement de l'arrangement (3), **caractérisé en ce**
- **que** le matériau supraconducteur utilisé est du borure de magnésium,
- **que** le premier cryostat (K1) se compose uniquement d'un tube (10) isolé thermiquement et
- **qu'**une isolation résistante aux hautes tensions (15) est disposée dans l'espace intermédiaire (11) entre le premier cryostat (K1) et le deuxième cryostat (K2), laquelle entoure entièrement le tube (10) du premier cryostat (K1) et repose sur son isolation thermique (9) et qui, pendant le fonctionnement de l'arrangement, est brassée par le gaz liquéfié acheminé à travers l'espace intermédiaire (11) et imprégnée par celui-ci.

2. Arrangement selon la revendication 1, **caractérisé en ce que** le premier réfrigérant utilisé est de l'hélium.
